Europäisches Patentamt

European Patent Office

Office européen des brevets

(11) Publication number : **0 476 987 A1**

# (12) EUROPEAN PATENT APPLICATION

(21) Application number : 91308497.6

(22) Date of filing : 18.09.91

(51) Int. Cl.⁵ : **B62D 11/10, F16H 15/20**

(30) Priority : **19.09.90 JP 249660/90**

(43) Date of publication of application :
**25.03.92 Bulletin 92/13**

(84) Designated Contracting States :
**DE FR GB IT SE**

(71) Applicant : **HANIX KOGYO KABUSHIKI KAISHA**
**40-2, Ikebukuro 2-chome, Toshima-ku Tokyo (JP)**

(72) Inventor : **Fukaya, Hiroshi**
**14-29, Sekizawa 2-chome**
**Fujimi-shi, Saitama-ken (JP)**

(74) Representative : **Bubb, Antony John Allen et al**
**GEE & CO. Chancery House Chancery Lane**
**London WC2A 1QU (GB)**

(54) **Differential device.**

(57)   A differential device for a vehicle comprises a drive shaft (5), a pair of cones (6) connected to said drive shaft so as to rotate at the same speed, and a pair of wheel shafts (2). Conical surfaces (6a) of said cones (6) are each accurately positioned in parallel to the axis of the corresponding wheel shafts, and a pair of ring wheels (4) are fitted on the wheel shafts (2) respectively in such a manner that the ring wheels (4) are fixed with respect thereto in the rotational direction but are slidable in the axial direction. The ring wheels (4) are arranged to be driven by outer conical surfaces (6a) of said left and right cones respectively, and a mechanism (a) is provided for moving the ring wheels (4) axially relatively to said wheel shafts in synchronism with the operation of a steering mechanism of the vehicle.

EP 0 476 987 A1

This invention relates to the improvement of a differential device for performing the differential operation of rotational speed of left and right drive wheels provided on the left and right sides of a vehicle body in response to a steering operation.

A conventional differential device know as a differential gear is so composed that the respective wheel shafts of left and right drive wheels are differentially rotated by the arrangement of gears forming a planetary gear so as to equalize the arithmetic mean of the sum of angular velocity of the wheel shaft of the drive wheel at one side and that of the wheel shaft of the drive wheel at the other side or the difference therebetween.

Such a conventional differential device performs the differential operation in angular velocities of the respective wheel shafts of the left and right drive wheels, since a difference between the resistances applied to the left and right wheels is caused by the deviation of a steering wheel due to its steering operation. Therefore, when one of the left and right drive wheels falls into a muddy place free from resistance, for instance, the drive wheel losing the resistance rotatably slips at high speed, while the other drive wheel does not rotate to thereby make the travel of a vehicle impossible.

The present invention is provided in order to meet such a problem of the conventional differential device, and its object is to provided a new differential device for forcibly driving the respective wheel shafts of left and right drive wheels at the angular velocities corresponding to the steering operation to rotate the left and right drive wheels while holding the predetermined angular velocities, even if one of the left and right drive wheels falls into a muddy place and loses the resistance.

Brief description of the drawings.

Fig. 1 is a cross-sectional view showing a differential device in its developed state as a preferred embodiment according to the present invention;
Fig. 2 is a longitudinal sectional side view showing a difference device as another preferred embodiment;
Fig. 3 is a cross-sectional view showing a differential device in its developed state as a further preferred embodiment;
Fig. 4 is a longitudinal sectional side view showing an essential part of the above embodiment; and
Figs. 5 and 7 are views for explaining the operation of the embodiment shown in Fig. 1.
The preferred embodiments of the invention will be described with reference to the accompanying drawings.

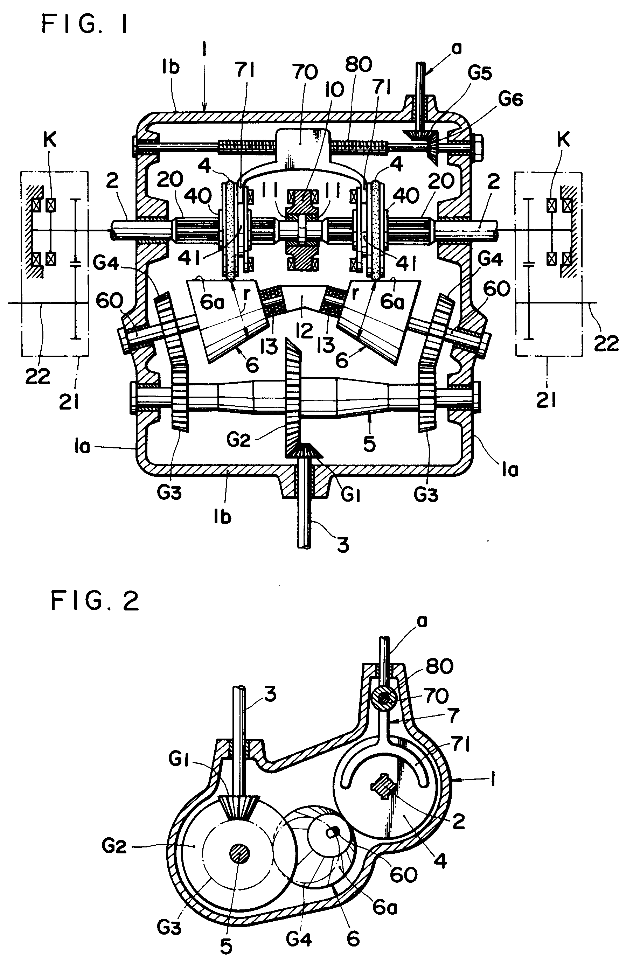

Referring to Fig. 1, reference numeral 1 designates a casing of a differential mechanism formed into a substantially square box-like shape, 2 left and right wheel shafts, 3 a drive shaft connected to an output shaft of an engine, 4 ring wheels respectively supported on the left and right wheel shafts 2, 5 an intermediate shaft, 6 cones, and reference symbol $\underline{a}$ designates a steering mechanism.

The wheel shafts 2 are respectively journalled by left and right casing walls 1a of the casing 1 with their axes aligned with each other. The respective inside ends of the wheel shafts 2 projecting into the casing 1 are rotatably mounted on a bearing support metal member 10 of the casing 1 through bearing 11. The wheel shafts 2 are respectively formed with axial splines 20 on their peripheral surface surrounded by the inner surfaces of the casing 1 between the support member 10 and the left and right casing walls 1a.

The ring wheels 4 are respectively fitted on the wheel shafts 2 such that these ring wheels 4 are brought into engagement with the wheel shafts 2 in the rotational direction as being axially slidable on the wheel shafts 2 by fitting the splines 20 in other splines (not shown) provided on the inner peripheral surfaces of boss portions 40 of the ring wheels 4. The inside faces of the ring wheels 4 facing the support member 10 are respectively provided with brake teeth 91 meshing with brake teeth 90 respectively provided on the left and right side faces of the support member 10. The outside ends of the wheel shafts 2 projecting from the casing 1 are respectively connected to final wheel shafts 22 through transmission gear mechanism 21 including parking brakes K.

A lower end of the drive shaft 3 is connected to an output shaft of the engine (not shown), and an upper side of the drive shaft 3 is journalled by a lower wall 1b of the casing 1. A bevel gear G1 is fitted on the upper end of the drive shaft 3.

The intermediate shaft 5 is disposed between the upper end of the drive shaft 3 and rotatably mounted on the casing 1. A bevel gear G2 meshing with the bevel gear G1 is fixed on the center portion of the intermediate shaft 5. A pair of transmission gears G3 are fixed on left and right end portions of the intermediate shaft 5 respectively.

The cones 6 are disposed symmetrically left and right between the intermediate shaft 5 and the left and right wheel shaft 2 in such manner that small-diameter sides of the cones 6 are opposed to each other. The cones 6 are respectively fixed on rotary shafts 60. The shafts 60 are rotatably mounted on the casing 1 through a bearing 13 of a bearing support metal member 12 provided integrally in the casing 1 and another bearing of the left and right walls 1a.

The cones 6 are synchronously rotated at the same speed with the rotation of the intermediate shaft 5 by respectively meshing a pair of transmission gear G4 provided on the rotary shafts 60 with a pair of transmission gears G3 of the intermediate shaft 5. Conical transmission surfaces 6a of the cones 6 facing the wheel shafts 2 are positioned as being accurately parallel to the axes of the wheel shafts 2. The peripheral surfaces of the ring wheels 4 respectively fitted to the wheel shafts 2 are in contact with the sides of the conical transmission surfaces 6a.

The left and right wheel shafts 2, which are rotated by the rotational power transmitted from the ring wheels 4 respectively disposed in contact with the transmission surfaces 6a of the left and right cones 6, have their angular velocities determined depending on the contact positions of the ring wheels 4 with the transmission surfaces 6a of the left and right cones 6.

A reference numeral 7 designates a shifter for varying the contact positions of the ring wheels 4 with the transmission surfaces 6a of the cones 6 to determine the angular velocities of the left and right wheel shafts 2 according to the operational amount of the steering mechanism $a$ in response to the operation of a steering wheel. The shifter 7 is supported in the casing 1 by a screw shaft 80 by screwing a boss portion 70 of the shifter 7 on the screw shaft 80 so that the shifter 7 is moved in the axial direction of the screw shaft 80 through the rotation of the screw shaft 80. The screw shaft 80 is laterally journalled between the left and right walls 1a of the casing 1 such that the axis of the screw shaft 80 extends parallel to the axes of the left and right wheel shafts 2. A pair of left and right forks 71 respectively formed on bifurcated end portions extending from left and right ends of the boss portion 70 are fittingly into engagement with engaging grooves 41 of the left and right ring wheels 4.

The steering mechanism $a$ for rotating the screw shaft 80 in order to displace the shifter 7 is formed on a rotating steering rod, and is journalled by one (the upper end side in Fig. 1) of the upper wall 1b of the casing 1. This steering mechanism $a$ displaces the shifter 7 left and right by rotating the screw shaft 80 by rotating the steering rod in response to the operation of the steering wheel by meshing a bevel gear G5 provided on an inner end of the steering rod projecting into the casing 1 with a bevel gear G6 provided on one end of the screw shaft 80.

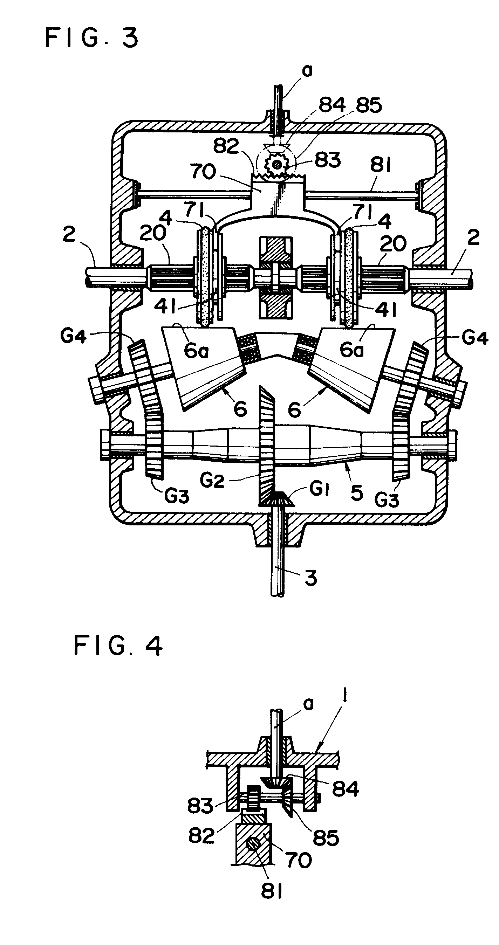

The screw shaft 80 supporting the shifter 7 is an operating mechanism for varying the transmitting contact positions of the ring wheels 4. As long as the operating mechanism displaces the ring wheels 4 according to the operational amount of the steering mechanism $a$, such an operating mechanism will suffice for the screw shaft 80. As shown in Figs. 3 and 4, the operating mechanism for displacing the shifter 7 may be changed into another proper operating mechanism, in which the boss portion 70 of the shifter 7 is supported by a guide rod 81 laterally provided in the casing 1 so that the shifter 7 is slidable left and right, a rack 82 extending along the guide member 81 is provided on the upper peripheral surface of the boss portion 70, a pinion 83 meshing the rack 82 is connected with the steering mechanism $a$ through transmission gears 84 and 85, whereby the shifter 7 is moved through the rotation of the steering mechanism $a$.

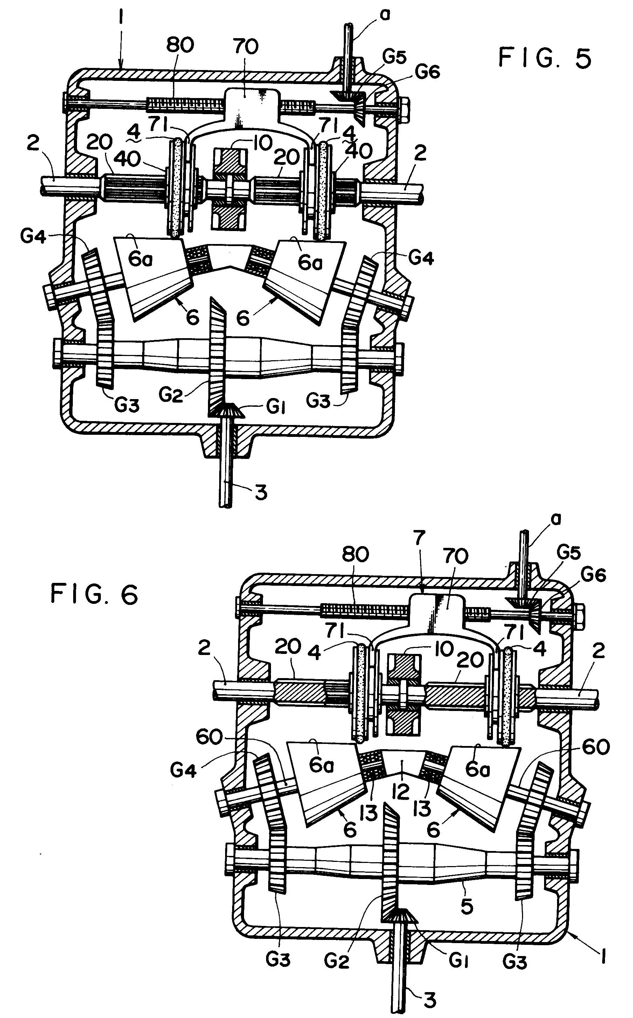

The shifter 7 displaces the ring wheels 4 according to the operational amount of the steering mechanism $a$ in response to the steering operation such that when one ring wheel 4 comes to a position where the the one ring wheel 4 makes contact with the smallest effective diameter portion of the transmission surface 6a of the cone 6 corresponding to the one ring wheel 4, the other ring wheel 4 comes to a position where the other ring wheel 4 makes contact with the largest effective diameter portion of the transmission surface 6a of the cone 6 corresponding to the other ring wheel 4 to thereby define the operational range of the shifter 7. However, when the positional relation between the ring wheels 4 and the cones 6 is such that when one ring wheel 4 moves off the smallest effective diameter of the corresponding transmission surface 6a as shown in Fig. 6, the other ring wheel 4 still keeps transmissively making contact with the largest effective diameter portion of the cone 6 corresponding to the other ring wheel 4, the operational range of the shifter 7 may be expanded to such a state that the wheel shaft 2 corresponding to the other ring wheel 4 is driven at the predermined speed, while the rotational speed of the other wheel shaft 2 corresponding the one ring wheel 4 is defined as 0.

The gradient of each of the transmission surfaces 6a of the left and right cones 6 for determining the differential ratio of the angular velocities of the left and right wheel shafts 2 and the displacement of the ring wheel 4 by the shifter 7 corresponding to the operational amount of the steering mechanism $a$ are properly set depending on the type and form of a vehicle using the differential device.

The embodiment shown in Fig. 1 is applied to a vehicle, in which an engine is mounted at the rear of the vehicle body, and the steering mechanism is provided on the front end side of the vehicle body. When the vehicle incorporating the differential device has both the engine and the steering mechanism provided on the front of the vehicle body, the steering mechanism $a$ may be journalled by the casing wall 1a, at the side where the drive shaft 3 is journalled, or otherwise, the steering mechanism $a$ may be selectively journalled by the upper side wall 1c or the lower side wall of the casing 1 in parallel to the drive shaft 3, as shown in Fig. 2.

The differential device as the preferred embodiment of the present invention is operated as follows:

When the steering device is under the straight travel condition, and the steering mechanism $a$ is in the neutral position, the shifter 7 is held such that a pair of left and right ring wheels 4 come into contact with the transmission surfaces 6a on their positions equal to each other in effective diameter of $r$, as shown in Fig. 1. Therefore, the ring wheels 4 rotating in contact with the transmission surfaces 6a are rotated at the same speed, and the left and right wheel shafts 2 receiving the rotational power transmitted from the ring wheels 4 through the splines 20 are rotated at the equal angular velocity.

When the shifter 7 is moved rightward in Fig. 1 by operating the steering mechanism a so as to turn the vehicle body leftward, the left and right ring wheels 4 are thereby respectively moved rightward relative to the cones 6, as shown in Fig. 5. In this state, the left ring wheel 4 fitted on the left wheel shaft 2 is rotated at the reduced speed corresponding to the reduction of the effective diameter of the cone 6. Also, the right ring wheel 4 fitted on the right wheel shaft 2 is rotated at the increased speed corresponding to the expansion of the effective diameter of the cone 6. Therefore, the vehicle body is made to turn leftward. The slow-down of the left wheel shaft 2 and the speed-up of the right wheel shaft 2 are performed in proportion to the displacement of the ring wheels 4 by the shifter 7 so as to equalize to arithmetic mean of the sum of the slow-down and the speed-up or the difference therebetween, since the left and right cones 6 take the same shape and are disposed as being symmetrical left and right.

Accordingly, the left and right wheel shafts 2 are capable of being forcibly driven at the angular velocities corresponding to the operational amount of the steering mechanism a.

## Claims

1. A differential device for use in transmitting drive from a drive shaft (5) to a pair of coaxial, individually rotatable wheel shafts (2), characterised in that said device includes a variable speed transmission mechanism (4,6) coupled between said drive shaft (5) and each of said wheel shafts (2) said variable speed transmission mechanism (4,6) being coupled to a steering mechanism (a) and the arrangement being such that the relative speeds at which said wheel shafts (2) are driven by said transmission mechanism (4,6) is varied in response to adjustment of said steering mechanism.

2. A differential device according to Claim 1 characterised in that said transmission mechanism (4,6) comprises: a pair of left and right cones (6) having the same shape, said cones being coupled to said drive shaft (5) so as to rotate at the same speed as one another and having respective conical transmission surfaces (6a), positioned in parallel to the axes of corresponding ones of said wheel shafts; a pair of left and right ring wheels (4) having the same diameter and fitted on said wheel shafts (2) respectively in such a manner that said ring wheels (4) are fixed relating thereto in the rotational direction but are slidable in the axial direction, said ring wheels (4) being arranged to be driven by contact with said conical transmission surfaces of said left and right cones (6) respectively; and that said steering mechanism (a) is arranged to move said ring wheels (4) axially of said wheel shafts in synchronism with the operational adjustment of said steering mechanism (a).

FIG. I

FIG. 2

FIG. 3

FIG. 4

FIG. 5

FIG. 6

European Patent
Office

**EUROPEAN SEARCH REPORT**

Application Number

EP    91 40 2470

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-368451 (MATSUTANI CHEMICAL INDUSTRIES CO. LTD.) * the whole document * | 1-2 | A23L1/09 C08B30/18 A21D2/18 |
| D | & JP-A-2145169 | | |
| P,X | EP-A-443788 (MATSUTANI CHEMICAL INDUSTRIES CO. LTD.) * claim 3 * | 1-2 | |
| P,X | EP-A-443789 (MATSUTANI CHEMICAL INDUSTRIES CO. LTD.) * claim 3 * | 1-2 | |
| | | | **TECHNICAL FIELDS SEARCHED (Int. Cl.5 )** |
| | | | A23L C08B A21D |

The present search report has been drawn up for all claims

| Place of search | Date of completion of the search | Examiner |
|---|---|---|
| BERLIN | 30 OCTOBER 1991 | ALVAREZ ALVAREZ C. |

EPO FORM 1503 03.82 (P0401)